# EUROPÄISCHE PATENTSCHRIFT

(11) **EP 1 230 075 B1**
(45) Veröffentlichungstag und Bekanntmachung des Hinweises auf die Patenterteilung: **18.05.2005**
(21) Anmeldenummer: 00987089.0
(22) Anmeldetag: 02.11.2000
(51) Int. Cl.: B29C 45/14, B29C 45/73

(54) **SPRITZGIESSVORRICHTUNG ZUR UMSPRITZUNG VON RUNDSCHWEISSNÄHTEN EINER ROHRLEITUNG**
DEVICE FOR APPLYING A PLASTIC SHEATHING TO A PIPELINE AT PIPE CONNECTIONS
DISPOSITIF D'APPLICATION DE REVETEMENT EN MATIERE PLASTIQUE SUR LES RACCORDS D'UNE CONDUITE

(30) Priorität: 15.11.1999 DE 19955726
(43) Veröffentlichungstag der Anmeldung: 14.08.2002
(73) Patentinhaber: EUPEC PipeCoatings GmbH, 45473 Mülheim a. d. Ruhr (DE)
(72) Erfinder: MALLY, Günter, 59077 Hamm (DE); BLOME, Peter, A., 44623 Herne (DE)
(74) Vertreter: Meissner, Peter E., Dipl.-Ing.
(86) Internationale Anmeldenummer: PCT/DE2000/003892
(87) Internationale Veröffentlichungsnummer: WO 2001/036173

(56) Entgegenhaltungen:
- EP-A- 0 366 299
- GB-A- 856 040
- GB-A- 1 128 878
- PATENT ABSTRACTS OF JAPAN vol. 017, no. 096 (M-1372), 25. Februar 1993 (1993-02-25) & JP 04 290712 A (TOYODA GOSEI CO LTD), 15. Oktober 1992 (1992-10-15)
- PATENT ABSTRACTS OF JAPAN vol. 018, no. 666 (M-1724), 15. Dezember 1994 (1994-12-15) & JP 06 262640 A (TOYODA GOSEI CO LTD), 20. September 1994 (1994-09-20)

## Beschreibung

Die Erfindung betrifft eine Vorrichtung zur Kunststoffummantelung von durch Rundschweißnähte hergestellten Verbindungen einer Rohrleitung aus Stahlrohren, die mit einer werksseitig hergestellten Kunststoffisolierung versehen sind, gemäß dem Gattungsbegriff des Patentanspruchs 1.

Aus der WO 90/02038 ist eine Vorrichtung zur Nachisolierung von Stahlrohren bekannt, die jeweils durch eine Rundschweißnaht miteinander verbunden sind und bereits mit einer werksseitig hergestellten Kunststoffisolierung beispielsweise aus Polyäthylen oder Polypropylen versehen sind. Damit die werksseitige Kunststoffisolierung durch den Schweißvorgang nicht beschädigt wird, sind die Rohre jeweils über ein kurzes Stück ihrer axialen Länge an den Enden ohne Beschichtung belassen worden. Nach der Verbindung zweier Rohre durch eine Rundschweißnaht müssen die unbeschichteten Teillängen im Verbindungsbereich zur Vermeidung äußerer Korrosionsangriffe nachisoliert werden. Hierzu ist ein Spritzgießwerkzeug vorgesehen, das manschettenartig im Bereich der Rundschweißnaht um die Stahlrohre gelegt und über eine Angießvorrichtung an eine Spritzgießeinrichtung für einen spritzfähigen Kunststoff angeschlossen werden kann. Es ist in seiner axialen Länge so dimensioniert, daß es den Bereich der nachzuisolierenden Teillänge überlappend überdeckt und seine beiden stimseitigen Enden auf der vorhandenen werksseitigen Kunststoffummantelung der beiden verbundenen Stahlrohre aufliegen. Damit das Spritzgießwerkzeug rasch auf den Verbindungsbereich der Rohrleitung montiert und nach erfolgter Nachisolierung wieder leicht von der Rohrleitung demontiert werden kann, ist es geteilt ausgeführt. Typischerweise besteht es aus zwei z. B. durch ein Scharnier zusammengehaltenen Halbschalen, die um die Rohrleitung gelegt und dann an der offenen Stelle miteinander durch eine Verriegelungseinrichtung verbunden werden, so daß es auf dem Rohrstrang befestigt ist. Das Spritzgießwerkzeug ist im wesentlichen hohlzylindrisch ausgebildet, wobei sein Innendurchmesser im Bereich des nachzuisolierenden Schweißnahtbereichs dem Außendurchmesser der zu erzeugenden Kunststoffummantelung entspricht. Es umgibt den Nachisolierungsbereich somit mit einem gewissen Abstand. An seinen stimseitigen Enden ist der Innendurchmesser des Spritzgießwerkzeugs dagegen kleiner und entspricht dem Außendurchmesser der werksseitigen Kunststoffisolierung.

Im praktischen Betrieb besteht jedoch vielfach ein gewisser Ringspalt zwischen der werksseitigen Kunststoffisolierung und der Innenoberfläche des Spritzgießwerkzeugs an dessen stimseitigen Enden. Dieser Ringspalt bereitet Probleme, da ein Teil des in das Spritzgießwerkzeug eingespritzten Kunststoffs durch diesen Spalt, der im idealen Fall die Größe null haben sollte, nach außen austritt. Das hat im Spritzgießwerkzeug einen Druckverlust zur Folge, der für eine ordnungsgemäße Durchführung der Nachisolierung nachteilig ist und zu Qualitätseinbußen führen kann (z.B. Einschluß von Luftblasen in der Beschichtung). Dieses Problem ist um so gravierender, je größer die Durchmesser der Stahlrohre sind und je stärker die Abweichungen von der idealen Rohrgeometrie (z.B. Ovalität) ausfallen.

Aus der US 3 387 075 A ist es bekannt, dass bei einem Verfahren zur Herstellung von Haushaltssieben aus Kunststoff durch Spritzgießen die Fließfrcnt des Kunststoffmaterials in unerwünschter Weise durch Kühlung zum Stillstand kommt. Darüber hinaus ist aus der DE 34 40 326.4 ein Spritzgießverfahren zur Herstellung von Haushaltssieben bekannt, bei dem ein im wesentlichen halbkugelförmig gewölbtes Siebgeflecht aus Draht in einem zweiteiligen Spritzgießwerkzeug im Bereich eines umlaufenden Kragens auf einer schmalen ringförmigen Fläche eingeklemmt wird, bevor der Kragen mit Kunststoff umspritzt und ein Haltegriff angespritzt wird. Durch Kühlung des Werkzeugs oder des eingeklemmten Siebgeflechts wird sicher verhindert, dass Kunststoff in unerwünschter Weise über den Bereich der Einklemmzone hinaus austritt. Irgendwelche Hinweise auf eine Nachisolierung von Stahlrohren im Bereich einer Rundschweißnaht ergeben sich hieraus nicht

In der JP-A-4290712 ist eine Verbindungstechnik für Kunststoffrohre mittels einer anzuspritzenden Manschette offenbart. Die beiden zu verbindenden Rohre werden auf eine mit zahnartigen Vorsprüngen versehene Stützhülse aufgeschoben, so dass ein definierter axialer Abstand zwischen beiden verbleibt. Eine, die beiden Rohre außen umfassende, Spritzgießvonichtung ist in den beiden Endbereichen so ausgebildet, dass diese mit der Außenoberfläche der Rohre eine Dichtstelle bildet. Diese Endbereiche sind stärker gekühlt als der mittlere Bereich der Spritzgießvorrichtung, um sicherzustellen, dass der im Querschnitt dickere Bereich der Manschette problemlos ausgefüllt wird.

GB-A-0856040 zeigt ebenfalls eine Verbindungstechnik für Kunststoffrohre. Um den Durchflusswiderstand nicht zu erhöhen, ist eine innen liegende Stützhütse in entsprechenden Ausnehmungen der Endbereiche der beiden zu verbindenden Rohre angeordnet. Die beiden Rohre sind auf der Stützhütse so angeordnet, dass ein axialer Abstand zwischen beiden verbleibt. Mittels einer die beiden Rohre umfassenden Spritzgießvorrichtung wird eine Manschette ungespritzt. Die Manschette bildet die äußere Klammer für die Rohrverbindung.

Gegenstand der JP-A-6262640 ist eine Verbindungstechnik für ein abgewinkeltes T-Stück von Kunststoffrohren. Die innere Abstützung bildet eine dreiarmige Stützhülse. Die äußere Klammer wird durch eine anzuspritzende Manschette gebildet. Um einen Austritt der Schmelze in den abzudichtenden Endbereichen zu verhindem, sind in diesen Endbereichen innen gekühlte Dichtringe angeordnet, die abdichtend auf der Außenfläche der Rohre aufliegen.

Aufgabe der vorliegenden Erfindung ist es daher, eine gattungsgemäße Vorrichtung dahingehend zu verbessern, daß auch bei der Nachisolierung von Schweißnahtbereichen an Rohren mit großen Durchmessem und/oder stärkeren Abweichungen ihres Querschnitts von der idealen Kreisform eine wirksame Abdichtung im Bereich der Stirnseiten der Vorrichtung gewährleistet wird. Der damit verbundene Aufwand soll möglichst gering sein.

Gelöst wird diese Aufgabe erfindungsgemäß dadurch, daß im Bereich der stimseitigen Enden des Spritzgießwerkzeugs jeweils eine in Umfangsrichtung verlaufende Kühleinrichtung angeordnet ist, die das aus dem Hohlraum, der von dem Kunststoffmaterial der Nachisolierung auszufüllen ist, durch den Ringspalt zwischen der werksseitigen Kunststoffisofierung und dem aufliegenden Spritzgießwerkzeug austretende Kunststoffmaterial der Nachisolierung rasch abkühlt und zur Erstarrung bringt. Der Grundgedanke der vorliegenden Erfindung ist somit darin zu sehen, daß nicht versucht wird, die Vorrichtung selbst so herzurichten, daß sie sich von vomherein völlig dicht an die werksseitige Kunststoffisolierung anlegt, sondern daß das zur Nachisolierung eingesetzte Kunststoffmaterial selbst zur Abdichtung herangezogen wird. Das in den Ringspalt zwischen der Vorrichtung und der vorhandenen werksseitigen Kunststoffisolierung eintretende fließfähige Kunststoffmaterial wird durch eine Kühleinrichtung an der Vorrichtung unverzüglich abgekühlt, so daß es erstarrt bevor es in störenden Mengen aus der Vorrichtung austreten kann. Das erstarrte Kunststoffmaterial der Nachisolierung bewirkt hierdurch eine so effektive Abdichtung, daß diese Dichtung dem im Spritzgießwerkzeug herrschenden Spritzdruck von z. B. 200 bar oder mehr ohne weiteres standhält. Dadurch wird der bisher vielfach eintretende Druckabfall vollständig vermieden, so daß eine hochwertige Nachisolierung herstellbar ist. Der für die erfindungsgemäße Lösung zu treibende Aufwand ist sehr gering.

Vorteilhafte Ausgestaltungen der Erfindung sind in den Patentansprüchen 2 bis 9 angegeben.

Anhand der in den Figuren dargestellten Ausführungsbeispiele wird die Erfindung nachfolgend näher erläutert. Es zeigen:
- Figur 1: einen axialen Längsschnitt durch eine auf einem Rohrstrang montierte erfindungsgemäße Vorrichtung und
- Figur 2: einen Ausschnitt aus einer längsgeschnittenen erfindungsgemäßen Vorrichtung mit abgewandelter Kühleinrichtung.

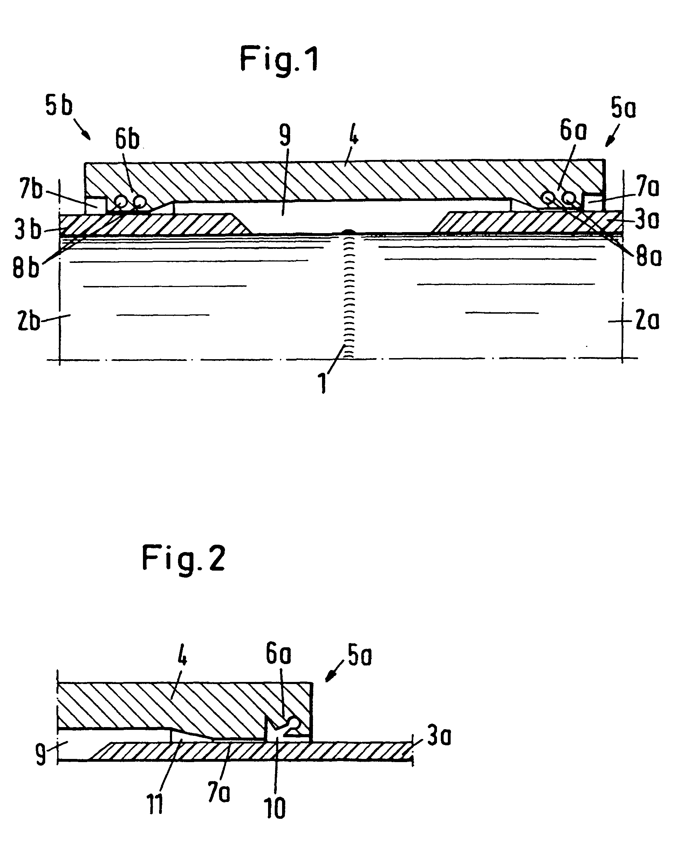

In Fig. 1 ist der Bereich zweier mit einer werksseitigen Kunststoffisolierung 3a, 3b aus beispielsweise Polyäthylen oder Polypropylen versehener Stahlrohre 2a, 2b dargestellt, die durch eine Rundschweißnaht 1 miteinander verbunden sind. Im unmittelbaren Bereich der Schweißnaht 1 fehlt die werksseitige Beschichtung, da diese sonst ohnehin durch die beim Legen der Rundschweißnaht 1 entstehende Hitze zerstört würde. Zweckmäßigerweise läuft die werksseitige Beschichtung 3a, 3b in einem schrägen Böschungswinkel aus. Um im Bereich der Rundschweißnaht 1 die schädliche Wirkung äußerer Korrosionsangriffe auf die Stahlrohre 2a, 2b zu verhindern, muß eine möglichst hochwertige, d.h. der Qualität der werksseitigen Kunststoffummantelung entsprechende Nachisolierung erfolgen. Dies wird durch die erfindungsgemäße Vorrichtung ermöglicht, die ein Spritzgießwerkzeug 4 darstellt, das geteilt ausgeführt ist, damit es leicht auf dem Rohrleitungsstrang der Stahlrohre 2a, 2b montiert und von diesem nach Durchführung der Nachisolierung wieder schnell abgenommen werden kann. Hierzu ist das Spritzgießwerkzeug 4, das im wesentlichen eine hohlzylindrische Form aufweist, in nicht näher dargestellter Weise aus zwei Halbschalen zusammengesetzt, die beispielsweise an einer Seite durch ein Scharnier klappbar zusammengehalten werden und an der anderen Seite durch eine leicht bedienbare Verriegelungseinrichtung starr miteinander verbindbar sind. Das Spritzgießwerkzeug 4 ist auf seiner Innenseite derartig dimensioniert, daß es einen Hohlraum 9 zur Rohroberfläche hin schafft, der von dem Kunststoffmaterial der Nachisolierung auszufüllen ist und in axialer Richtung den Bereich der Rundschweißnaht 1 so weit überdeckt, daß auch noch die Enden der werksseitigen Kunststoffisolierung 3a, 3b überlappt werden. Hierzu ist der Innendurchmesser in diesem Bereich größer als der Durchmesser der werksseitigen Kunststoffisolierung 3a, 3b. Im Bereich der stirnseitigen Enden 5a, 5b des Spritzgießwerkzeugs 4 ist dagegen sein Innendurchmesser deutlich kleiner und entspricht dem Außendurchmesser der werksseitigen Kunststoffisolierung 3a, 3b. Somit liegt das Spritzgießwerkzeug 4 im montierten Zustand von vornherein bereits relativ dicht auf der Kunststoffisolierung 3a, 3b auf. Insbesondere infolge von Durchmessertoleranzen der Stahlrohre 2a, 2b und Abweichungen von der idealen kreisrunden Rohrform (Ovalität) besteht jedoch in den meisten Fällen zumindest in Teilbereichen über den Rohrumfang ein Spalt (Ringspalt 7a, 7b) zwischen dem Spritzgießwerkzeug 4 und der werksseitigen Kunststoffisolierung 3a, 3b. Im Bereich der stirnseitigen Enden 5a, 5b des Spritzgießwerkzeugs 4 weist dieses jeweils eine Kühleinrichtung 6a, 6b auf, die im dargestellten Ausführungsbeispiel in Form von parallel zueinander verlaufenden umlaufenden Kühlkanälen 8a, 8b für ein flüssiges Kühlmedium ausgebildet sind. Die Kühlkanäle 8a, 8b können beispielsweise so miteinander verbunden sein, daß das Kühlmittel durch den einen Kühlkanal in einer bestimmten Richtung fließt und im Bereich der Teilung des Spritzgießwerkzeugs in den anderen Kühlkanal umgelenkt wird und in entgegengesetzter Richtung parallel zu dem ersten Kühlkanal zurückströmt. Die Anschlüsse für die Zu- und Ableitung des Kühlmediums sind in Figur 1 nicht näher dargestellt worden. Vorzugsweise sind die Anschlüsse für die Zu- und Ableitung des Kühlmediums jeweils im Nahbereich der Teilung des Spritzgießwerkzeugs angeordnet. Ob ein oder mehrere Kühlkanäle vorgesehen werden, richtet sich nach den jeweiligen Erfordernissen des Spritzgießwerkzeugs 4. Von Bedeutung ist dabei nicht nur die Querschnittsform und Querschnittsgröße des oder der Kühlkanäle, sondern auch die Temperatur des vorgesehenen Kühlmittels.

Durch eine nicht dargestellte Angießeinrichtung kann der fließfähige Kunststoff für die Nachisolierung in den den Rohrleitungsstrang ringförmig umgebenden Hohlraum 9 eingespritzt werden. Bei der Verwendung von Polyäthylen weist das eingespritzte Material der Kunststoffnachisolierung beispielsweise eine Temperatur von ca. 200-220°C auf. Diese Temperatur reicht aus, um die werkseitige Kunststoffisolierung oberflächlich aufzuschmelzen, so daß sie mit dem Material der Nachisolierung verschweißt. Die eingespritzte Menge füllt den Hohlraum 9 zunehmend aus und dringt, da das Spritzgießwerkzeug 4 nicht vollständig dicht auf der werksseitigen Kunststoffisolierung 3a, 3b aufliegt, im Bereich der stirnseitigen Enden 5a, 5b in die Ringspalte 7a, 7b ein. Da die Wand des Spritzgießwerkzeugs 4 unter der Wirkung der Kühleinrichtungen 6a, 6b an diesen Stellen eine erheblich unter der Temperatur des eingespritzten Kunststoffmaterials liegende Temperatur aufweist, wird dem in die Ringspalte 7a, 7b eingetretenen Kunststoffmaterial sehr schnell so viel Wärme entzogen, daß es erstarrt und auf diese Weise eine äußerst effektive ringförmige Abdichtung des Spritzgießwerkzeugs 4 nach außen hin bewirkt, so daß kein Material wirklich nach außen hin austreten kann, zumindest nicht in bedeutsamen Mengen.

In Figur 2 ist eine Abwandlung der erfindungsgemäßen Vorrichtung aus Figur 1 dargestellt. Die Abwandlung bezieht sich lediglich auf die im Endbereich 5a angeordnete Kühleinrichtung 6a. Diese ist nunmehr nicht als Flüssigkeitskühlung sondern als Gaskühlung mit ringförmig angeordneter Austrittsdüse 10 ausgeführt. Die Austrittsrichtung der Gasaustrittsdüse 10 ist von außen auf den Ringspalt 7a gerichtet. Daher kann das in den Hohlraum 9 eingespritzte Material der Nachisolierung zunächst ohne weiteres in den Ringspalt 7a eintreten. Sobald es jedoch versucht aus dem Spritzgießwerkzeug 4 nach außen hin auszutreten, gelangt es in den Wirkbereich der Gaskühlung. Durch die von der Gaskühlung bewirkte Abkühlung wird auch in diesem Fall eine äußerst schnelle Erstarrung des austretenden Kunststoffmaterials gewährleistet, so daß eine effektive Abdichtung des Spritzgießwerkzeugs 4 gewährleistet ist, bevor nennenswerte Mengen an Kunststoffmaterial aus dem Hohlraum 9 austreten können.

Es empfiehlt sich, den Übergangsbereich zwischen dem Teil des Spritzgießwerkzeugs 4, dessen Innendurchmesser dem Durchmesser der zu erzeugenden Kunststoffummantelung (Nachisolierschicht) entspricht, und dem Bereich der stimseitigen Enden 5a, 5b, dessen Innendurchmesser der werksseitigen Kunststoffisolierung 2a, 2b entspricht, konisch auszubilden. Dieser Übergangsbereich ist in Figur 2 mit dem Bezugszeichen 11 bezeichnet worden. Dadurch ergibt sich eine Nachisolierungsschicht, die einen vergleichsweise sanften Übergang zur vorhandenen werksseitigen Kunststoffisolierung 3a, 3b aufweist.

Als flüssiges Kühlmittel kommt grundsätzlich Kühlwasser in Frage, insbesondere wenn dieses auf eine deutlich unter der Umgebungstemperatur liegende Temperatur gebracht worden ist. Eine äußerst effektive Kühlung ergibt sich bei Verwendung von flüssigem Stickstoff. Für die Gaskühlung kann beispielsweise Preßluft oder auch ein anderes Druckgas eingesetzt werden. Dabei kann der Vorteil genutzt werden, daß sich die Temperatur des Gases infolge seiner Entspannung beim Austreten aus der ringförmig um den Rohrstrang gelegten Austrittsdüse deutlich absenkt.

Die Kühleinrichtung kann auch in Form von Kühlrippen ausgebildet sein, die außen im Nahbereich der stimseitigen Enden der erfindungsgemäßen Vorrichtung angeordnet sind. Auf diese Weise kann die abzuführende Wärme durch Konvektion an die Umgebung abgegeben werden. Diese Form der Kühlung ist aber im Regelfall weniger effektiv als die der in den Figuren 1 und 2 dargestellten Lösungen.

In manchen Fällen, insbesondere wenn die Taktzeiten für die einzelnen Nachisoliervorgänge relativ lang sind, kann es auch ausreichend sein, die Kühleinrichtung allein durch eine Materialanhäufung (d.h. größere Wanddicken) im Bereich der stirnseitigen Enden der Vorrichtung zu realisieren. Diese Materialanhäufung muß unter Berücksichtigung der spezifischen Wärmekapazität dieses Material so bemessen sein, daß ihre Masse ausreicht, um mindestens die bei einem Nachisoliervorgang im Bereich der stirnseitigen Enden abzuführende Wärmemenge aufnehmen können, ohne daß dabei die Temperatur der Materialanhäufung in die Nähe der Schmelztemperatur des für die Nachisolierung verwendeten Materials steigt. Die Erwärmungstemperatur der stimseitigen Enden mit der Materialanhäufung muß vielmehr deutlich darunter liegen, um eine ausreichend rasche Abkühlung der Schmelze im Bereich der ringförmigen Abdichtung des Spritzgießwerkzeugs zu gewährleisten. Damit sich die Vorrichtung bei den im Takt erfolgenden Nachisoliervorgängen nicht ständig auf immer höhere Temperaturen erwärmt, muß sichergestellt sein, daß jeweils zwischen zwei unmittelbar aufeinanderfolgenden Nachisoliervorgängen genügend Zeit verbleibt, damit durch die "normale" Abkühlung an Umgebungsluft oder durch Anwendung einer separaten äußeren Kühlung (z.B. Benetzen der Vorrichtung mit Kühlwasser) genügend Wärme nach außen abgegeben werden kann.

Es ist im Rahmen der Erfindung auch möglich, die unterschiedlichen Arten von Kühleinrichtungen in einer Vorrichtung miteinander zu kombinieren. Besonders vorteilhaft ist die gleichzeitige Anwendung eines Gaskühlsystems der vorstehend (Fig. 2) beschriebenen Art und von äußeren Kühlrippen und/oder größeren Materialanhäufungen im Bereich der stirnseitigen Enden.

### Bezugszeichenliste

- 1: Rundschweißnaht
- 2a, 2b: Stahlrohr
- 3a, 3b: werksseitige Kunststoffisolierung
- 4: Spritzgießwerkzeug
- 5a, 5b: stimseitiges Ende
- 6a, 6b: Kühleinrichtung
- 7a, 7b: Ringspalt
- 8a, 8b: Kühlkanal
- 9: Hohlraum für Nachisolierung
- 10: ringförmig angeordnete Austrittsdüse
- 11: konischer Bereich

## Patentansprüche

1. Vorrichtung zur Kunststoffummantelung von durch Rundschweißnähte (1) hergestellten Verbindungen einer Rohrleitung aus Stahlrohren (2a, 2b), die mit einer werksseitig . hergestellten Kunststoffisolierung (3a, 3b) versehen sind und im Bereich der Rundschweißnähte (1) durch Spritzgießen nachisoliert werden, mit einem an eine Spritzgießeinrichtung anschließbaren geteilten und im Bereich der Rundschweißnähte (1) manschettenartig um die Stahlrohre (2a, 2b) herum in der Weise leg- und befestigbaren Spritzgießwerkzeug (4), dass das Spritzgießwerkzeug (4) jeweils das Ende der werksseitigen Kunststoffisolierung (3a, 3b) der beiden miteinander verschweißten Stahlrohre (2a, 2b) überdeckt, wobei das Spritrgießwerkzeug (4) zumindest im axialen Bereich zwischen den werksseitigen Kunststoffisolierungen (3a, 3b) einen größeren Innendurchmesser aufweist als der Außendurchmesser der Kunststoffisolierung (3a, 3b) und die Endbereiche (5a, 5b) des Spritzgießwerkzeuges (4) einen Innendurchmesser ausweisen, der dem Außendurchmesser der werksseitigen Kunststoffisolierung (2a, 2b) entspricht
**dadurch gekennzeichnet,**
**dass** in den Endbereichen (5a, 5b) des Spritzgießwerkzeuges (4) jeweils eine in Umfangsrichtung verlaufende Kühleinrichtung (6a. 6b) angeordnet ist, die das aus dem Hohlraum (9) der vom Kunststoffmaterial der Nachisolierung auszufüllen ist, durch einen Ringspalt (7a, 7b) zwischen der werksseitigen Kunststoffisolierung (3a, 3b) und dem auffliegenden Spritzgießwerkzeug (4) austretende Kunststoffmaterial der Nachisolierung rasch abkühlt und zur Erstarrung bringt.

2. Vorrichtung nach Anspruch 1,
**dadurch gekennzeichnet,**
**dass** die Kühleinrichtung (6a, 6b) in Form eines oder mehrerer im Spritzgießwerkzeug (4) angeordneter umlaufender Kühlkanäle (8a, 8b) für ein flüssiges Kühlmittel ausgebildet ist.

3. Vorrichtung nach Anspruch 2,
**dadurch gekennzeichnet,**
**daß** die Kühlkanäle (8a, 8b) im Bereich der Teilung des Spritzgießwerkzeugs (4) jeweils in einen entgegengesetzt durchströmten, parallel verlaufenden Kühlkanal umgelenkt werden.

4. Vorrichtung nach Anspruch 2,
**dadurch gekennzeichnet,**
**daß** die Anschlüsse für die Zu- und Ableitung des Kühlmediums jeweils im Nahbereich der Teilung des Spritzgießwerkzeugs angeordnet sind.

5. Vorrichtung nach Anspruch 1,
**dadurch gekennzeichnet,**
**daß** die Kühleinrichtung als Gaskühlung mit ringförmig angeordneter Austrittsdüse (10) ausgebildet ist, wobei die Austrittsrichtung der Austrittsdüse (10) auf den Ringspalt (7a, 7b) gerichtet ist.

6. Vorrichtung nach einem der Ansprüche 1 bis 5,
**dadurch gekennzeichnet,**
**daß** der Übergangsbereich zwischen dem Bereich, dessen Innendurchmesser dem Durchmesser der zu erzeugenden Kunststoffummantelung entspricht, und dem Bereich der stimseitigen Enden (5a, 5b), dessen Innendurchmesser der werksseitigen Kunststoffisolierung (2a, 2b) entspricht, konisch ausgebildet ist.

7. Vorrichtung nach Anspruch 1,
**dadurch gekennzeichnet,**
**daß** die Kühleinrichtung (6a, 6b) in Form äußerer Kühlrippen ausgebildet ist.

8. Vorrichtung nach Anspruch 1,
**dadurch gekennzeichnet,**
**daß** die Kühleinrichtung (6a, 6b) als Materialanhäufung im Bereich der stirnseitigen Enden (5a, 5b) ausgebildet ist, wobei die Masse der Materialanhäufung unter Berücksichtigung von dessen spezifischer Wärmekapazität so bemessen ist, daß mindestens jeweils die für einen Nachisoliervorgang erforderliche abzuführende Wärmemenge aufgenommen werden kann, ohne daß die Temperatur der Materialanhäufung in die Nähe der Schmelztemperatur des für die Nachisolierung verwendeten Kunststoffs steigt.

9. Vorrichtung nach Anspruch 5 und mindestens einem der Ansprüche 7 und 8,
**dadurch gekennzeichnet,**
**daß** die Kühleinrichtung als Kombination einer Gaskühlung mit einer wärmeaufnehmenden Materialanhäufung und/oder äußeren Kühlrippen ausgebildet ist.

## Claims

1. Device for plastic-coating connections, produced by round weld seams (1), of a pipeline made of steel pipes (2a, 2b), which connections are provided with a plastic material insulation (3a, 3b) produced on the operations side and are subsequently insulated in the region of the round weld seams (1) by means of injection moulding, having an injection moulding tool (4) which can be connected to an injection moulding arrangement, is divided and can be placed and mounted in the region of the round weld seams (1) in a sleeve-like manner around the steel pipes (2a, 2b), in such a manner that the injection moulding tool (4) overlaps respectively the end of the operations-side plastic material insulation (3a, 3b) of both steel pipes (2a, 2b) which are welded to each other, the injection moulding tool (4) having, at least in the axial region between the operations-side plastic material insulations (3a, 3b), a larger internal diameter than the external diameter of the plastic material insulation (3a, 3b) and the end regions (5a, 5b) of the injection moulding tool (4) having an internal diameter which corresponds to the external diameter of the operations-side plastic material insulation (2a, 2b),
**characterised in that**,
in the end regions (5a, 5b) of the injection moulding tool (4), one cooling arrangement (6a, 6b) respectively, which extends in the circumferential direction, is disposed, which cooling arrangement rapidly cools and causes solidification of the plastic material of the subsequent insulation, which plastic material emerges, through an annular gap (7a, 7b) between the operations-side plastic material insulation (3a, 3b) and the mounted injection moulding tool (4), from the cavity (9) which is to be filled with the plastic material of the subsequent insulation.

2. Device according to claim 1,
**characterised in that**
the cooling arrangement (6a, 6b) is configured in the form of one or more circumferential cooling channels (8a, 8b) for a fluid coolant, which channels are disposed in the injection moulding tool (4).

3. Device according to claim 2,
**characterised in that**
the cooling channels (8a, 8b) in the region of the division of the injection moulding tool (4) are diverted respectively into a cooling channel which is flowed through in the opposite direction and extends in a parallel manner.

4. Device according to claim 2,
**characterised in that**
the connections for the supply and discharge of the coolant are disposed respectively in the immediate vicinity of the division of the injection moulding tool.

5. Device according to claim 1,
**characterised in that**
the cooling arrangement is configured as gas cooling with an annularly disposed outlet nozzle (10), the outlet direction of the outlet nozzle (10) being directed towards the annular gap (7a, 7b).

6. Device according to one of the claims 1 to 5,
**characterised in that**
the transition region between the region, the internal diameter of which corresponds to the diameter of the plastic material covering which is to be produced, and the region of the end-side ends (5a, 5b), the internal diameter of which corresponds to the operations-side plastic material insulation (2a, 2b), has a conical configuration.

7. Device according to claim 1,
**characterised in that**
the cooling arrangement (6a, 6b) is configured in the form of external cooling ribs.

8. Device according to claim 1,
**characterised in that**
the cooling arrangement (6a, 6b) is configured as a material accumulation in the region of the end-side ends (5a, 5b), the mass of the material accumulation, taking into account the specific heat capacity thereof, being dimensioned such that at least the heat quantity, which is respectively required and is to be dissipated for one subsequent insulation process, can be absorbed without the temperature of the material accumulation increasing close to the melting temperature of the plastic material used for the subsequent insulation.

9. Device according to claim 5 and at least one of the claims 7 and 8,
**characterised in that**
the cooling arrangement is configured as a combination of gas cooling with a heat-absorbing material accumulation and/or external cooling ribs.

## Revendications

1. Dispositif pour enrober de matière plastique des liaisons réalisées par des soudures circulaires (1) d'un conduit composé de tubes en acier (2a, 2b) qui sont pourvus d'une isolation en matière plastique (3a, 3b) réalisée en usine et sont isolés en supplément par moulage par injection dans la zone des soudures circulaires (1), comprenant un outil de moulage par injection (4) divisé pouvant être raccordé à un équipement de moulage par injection et pouvant être posé et fixé dans la zone des soudures circulaires (1) à la manière d'un manchon autour des tubes en acier (2a, 2b) de telle manière que l'outil de moulage par injection (4) recouvre l'extrémité de l'isolation en matière plastique réalisée en usine (3a, 3b) des deux tubes en acier (2a, 2b) soudés entre eux, l'outil de moulage par injection (4) présentant, au moins dans la zone axiale entre les isolations en matière plastique réalisées en usine (3a, 3b), un diamètre intérieur plus grand que le diamètre extérieur de l'isolation en matière plastique (3a, 3b) et les zones d'extrémité (5a, 5b) de l'outil de moulage par injection (4) présentant un diamètre intérieur qui correspond au diamètre extérieur de l'isolation en matière plastique réalisée en usine (2a, 2b),
**caractérisé en ce que**, dans chaque zone d'extrémité (5a, 5b) de l'outil de moulage par injection (4), est agencé un dispositif de refroidissement (6a, 6b) s'étendant dans le sens circonférentiel qui refroidit rapidement et amène à la solidification la matière plastique de l'isolation ultérieure sortant de l'espace creux (9) à remplir par la matière plastique de l'isolation ultérieure par une fente annulaire (7a, 7b) entre l'isolation en matière plastique réalisée en usine (3a, 3b) et l'outil de moulage par injection (4) reposant dessus.

2. Dispositif selon la revendication 1,
**caractérisé en ce que** le dispositif de refroidissement (6a, 6b) est conçu sous la forme d'un ou de plusieurs canaux de refroidissement (8a, 8b) circulaires disposés dans l'outil de moulage par injection (4) prévus pour un agent de refroidissement liquide.

3. Dispositif selon la revendication 2,
**caractérisé en ce que** les canaux de refroidissement (8a, 8b) dans la zone de la division de l'outil de moulage par injection (4) sont déviés chacun dans un canal de refroidissement s'étendant parallèlement, traversé en sens inverse.

4. Dispositif selon la revendication 2,
**caractérisé en ce que** les raccordements d'arrivée et de sortie de l'agent de refroidissement sont disposés dans la zone proche de la division de l'outil de moulage par injection.

5. Dispositif selon la revendication 1,
**caractérisé en ce que** le dispositif de refroidissement est conçu comme un refroidissement au gaz avec une buse de sortie (10) disposée en forme annulaire, la direction de sortie de la buse de sortie (10) étant orientée sur la fente annulaire (7a, 7b).

6. Dispositif selon l'une des revendications 1 à 5,
**caractérisé en ce que** la zone de transition entre la zone dont le diamètre intérieur correspond au diamètre de l'enrobage en matière plastique à produire et la zone des extrémités frontales (5a, 5b) dont le diamètre intérieur correspond à l'isolation en matière plastique réalisée en usine (2a, 2b) est de forme conique.

7. Dispositif selon la revendication 1,
**caractérisé en ce que** le dispositif de refroidissement (6a, 6b) est conçu sous la forme d'ailettes de refroidissement.

8. Dispositif selon la revendication 1,
**caractérisé en ce que** le dispositif de refroidissement (6a, 6b) est conçu comme une accumulation de matière dans la zone des extrémités frontales (5a, 5b), la masse de l'accumulation de matière étant dimensionnée en tenant compte de sa capacité calorifique spécifique, de telle manière qu'au moins la quantité de chaleur à évacuer nécessaire pour un processus d'isolation ultérieur puisse être absorbée sans que la température de l'accumulation de matière s'élève au voisinage de la température de fusion de la matière plastique utilisée pour l'isolation ultérieure.

9. Dispositif selon la revendication 5 et au moins l'une des revendications 7 et 8,
**caractérisé en ce que** le dispositif de refroidissement est conçu comme une combinaison d'un refroidissement au gaz avec une accumulation de matière absorbant de la chaleur et/ou des ailettes de refroidissement extérieures.
